# FASCICULE DE BREVET EUROPEEN

(11) **EP 2 125 402 B1**
(45) Date de publication et mention de la délivrance du brevet: **06.07.2011**
(21) Numéro de dépôt: 08762164.5
(22) Date de dépôt: 27.02.2008
(51) Int. Cl.: B60H 1/00

(54) **SYSTEME ET PROCEDE DE GESTION D'ENERGIE D'UN VEHICULE AUTOMOBILE**
SYSTEM UND VERFAHREN ZUM STROMMANAGEMENT EINES MOTORFAHRZEUGS
MOTOR VEHICLE ENERGY MANAGEMENT SYSTEM AND METHOD

(30) Priorité: 02.03.2007 FR 0753614
(43) Date de publication de la demande: 02.12.2009
(73) Titulaire: Renault s.a.s., 92100 Boulogne-Billancourt (FR)
(72) Inventeur: OLIVIER, Gérard, F-78380 Bougival (FR)
(86) Numéro de dépôt international: PCT/FR2008/050329
(87) Numéro de publication internationale: WO 2008/107623

(56) Documents cités:
- EP-A- 1 329 344
- FR-A- 2 885 169
- US-A1- 2003 037 562
- US-A1- 2005 109 031
- US-A1- 2006 080 985

## Description

La présente invention concerne le domaine automobile, et plus particulièrement la gestion de l'énergie calorifique à bord d'un véhicule automobile équipé d'un moteur à combustion interne.

On cherche à l'heure actuelle à diminuer au maximum les émissions polluantes de moteurs à combustion interne de véhicules automobiles. Les restrictions d'émission de polluants à l'échappement des moteurs nécessitent le développement de stratégies de dépollution de plus en plus efficaces.

L'une de ces stratégies consiste à faire recirculer une partie des gaz d'échappement issus de la combustion au moyen d'une conduite de recirculation partielle des gaz d'échappement (EGR). La réintroduction des gaz d'échappement à l'admission du moteur permet en effet de diminuer la température de combustion à l'intérieur des cylindres et donc de définir un compromis entre l'émission des particules et l'émission d'oxydes d'azote NOₓ.

Une autre stratégie permettant la diminution de l'émission de particules polluantes par réduction de la consommation en carburant consiste à refroidir l'air en sortie d'un compresseur d'alimentation du moteur.

Pour diminuer la consommation en carburant d'un véhicule automobile, il est également possible d'exploiter les calories produites par le moteur à combustion interne, par exemple pour augmenter rapidement la température du moteur et celle de l'huile de lubrification pendant une phase de démarrage à froid. En effet, lors d'un démarrage à froid, l'huile de lubrification présente une viscosité relativement importante, ce qui rend difficile l'entraînement des organes mécaniques et génère une consommation de carburant supérieure à celle en régime de température stabilisé. En outre, lors d'un tel démarrage à froid, la température dans les chambres de combustion du moteur est basse, ce qui conduit à une mauvaise combustion et à la génération de particules polluantes.

Pour exploiter ou valoriser les calories produites par le moteur à combustion interne, il est possible de prévoir un moteur à combustion interne équipé d'un circuit à cycle de Rankine remplaçant la boucle frigorifique classique prévue pour transférer des calories ou des frigories dans l'habitacle du véhicule automobile.

Un tel circuit à cycle de Rankine est couplé thermiquement avec le circuit de refroidissement du moteur de manière à récupérer et valoriser les calories du fluide de refroidissement lorsque celui-ci atteint une température prédéterminée. Pour plus de détails, on pourra par exemple se référer au brevet américain US 6, 928, 820.

Le moteur à combustion interne décrit dans ce document a notamment pour inconvénient de nécessiter des modifications relativement importantes de la boucle frigorifique existante afin de permettre une valorisation des calories véhiculées par le liquide de refroidissement du moteur, lors de certaines phases de fonctionnement de celui-ci. Ceci engendre un surcoût au niveau de la fabrication du moteur.

US 2006/080985 divulgue un système de gestion d'énergie selon le préambule de la revendication 1.

La présente invention vise donc à remédier à cet inconvénient.

La présente invention a encore pour but de prévoir un système de gestion d'énergie pour véhicule automobile qui soit particulièrement efficace, économique et compact.

Selon un premier aspect, l'invention concerne un système de gestion d'énergie d'un véhicule automobile comprenant une boucle frigorifique réversible avec circulation d'un fluide frigorigène, des moyens d'inversion du cycle de fonctionnement de la boucle frigorifique mobiles entre une position en mode frigorifique et une position en mode pompe à chaleur, au moins une première source chaude apte à évaporer le fluide frigorigène, et un moyen de récupération d'énergie à partir de la détente du fluide frigorigène à l'état de vapeur, les moyens d'inversion étant aptes à permettre un écoulement du fluide frigorigène de la première source chaude en direction du moyen de récupération, lorsqu'ils sont dans une position identique à celle correspondant au mode pompe à chaleur, pour obtenir un fonctionnement selon un mode de valorisation des calories véhiculées par le fluide frigorigène.

Ainsi, il devient possible d'obtenir un système de gestion d'énergie particulièrement économique dans lequel la valorisation de calories est commandée par la position des moyens d'inversion existants de la boucle frigorifique réversible de manière à permettre un écroulement du fluide frigorigène de la source chaude en direction du moyen de récupération d'énergie.

Avantageusement, les moyens d'inversion sont constitués par une vanne quatre voies de la boucle frigorifique réversible.

Le système comprend en outre au moins une seconde source chaude comprenant un échangeur de chaleur traversé par les gaz destinés à être admis à l'intérieur du moteur thermique du véhicule automobile.

Une telle disposition permet d'accroître l'efficacité de fonctionnement du moteur en augmentant la température des gaz admis à l'intérieur de celui-ci, lors d'une phase de démarrage à froid. Lors d'un fonctionnement en régime stabilisé, cette disposition permet, en outre, de refroidir à une température particulièrement basse l'air admis ainsi que des gaz d'échappement réintroduits à l'intérieur du moteur, ce qui diminue la température de combustion à l'intérieur des cylindres et réduit l'émission des particules polluantes.

Le système comprend en outre au moins un échangeur de chaleur apte à permettre la condensation du fluide frigorigène en liquide.

Avantageusement, l'échangeur de chaleur est un échangeur pour le chauffage de l'habitacle du véhicule automobile.

Dans un mode de réalisation, le système comprend une conduite pour l'alimentation en fluide frigorigène de l'échangeur de chaleur prévue entre les moyens d'inversion et le moyen de récupération d'énergie, directement en aval de celui-ci en considérant le sens de circulation du fluide frigorigène en mode de valorisation des calories dudit fluide.

La première source chaude est montée entre les moyens d'inversion et le moyen de récupération d'énergie, directement en amont de celui-ci en considérant le sens de circulation du fluide frigorigène en mode de valorisation des calories dudit fluide.

Dans un mode de réalisation, la première source chaude est montée entre une pompe de mise en circulation du fluide frigorigène et au moins une seconde source chaude.

La première source chaude est montée en aval d'au moins une seconde source chaude.

Avantageusement, la première source chaude comprend un échangeur de chaleur traversé par le fluide frigorigène et par un fluide caloporteur du moteur thermique du véhicule automobile.

En variante, la première source chaude comprend un échangeur de chaleur traversé par le fluide frigorigène et par des gaz d'échappement issus du moteur thermique du véhicule automobile.

Dans un mode de réalisation, le dispositif comprend une pompe de mise en circulation du fluide frigorigène disposée immédiatement en aval d'un échangeur de chaleur apte à permettre la condensation du fluide frigorigène en liquide.

Avantageusement, le système comprend une vanne d'isolement du circuit principal et du circuit auxiliaire d'un circuit de refroidissement du moteur thermique du véhicule automobile.

Selon un second aspect, l'invention concerne également un procédé de gestion d'énergie d'un véhicule automobile utilisant une boucle frigorifique réversible comprenant des moyens d'inversion du sens de circulation d'un fluide frigorigène de la boucle frigorifique pour réchauffer ou refroidir l'habitacle du véhicule, dans lequel on récupère les calories véhiculées par le fluide frigorigène à partir de la détente dudit fluide frigorigène à l'état de vapeur en positionnant les moyens d'inversion de la boucle frigorifique dans une position identique à celle correspondant au mode pour réchauffer l'habitacle du véhicule.

La présente invention sera mieux comprise à l'étude de modes de réalisation pris à titre d'exemple nullement limitatifs et illustrés par les dessins annexés, sur lesquels :
- les figures 1 à 3 illustrent un premier mode de réalisation de l'invention,
- la figure 4 est une vue de détail du mode de réalisation des figures 1 à 3, et
- les figures 5 à 10 illustrent respectivement des second, troisième, quatrième, cinquième, sixième et septième modes de réalisation de l'invention.

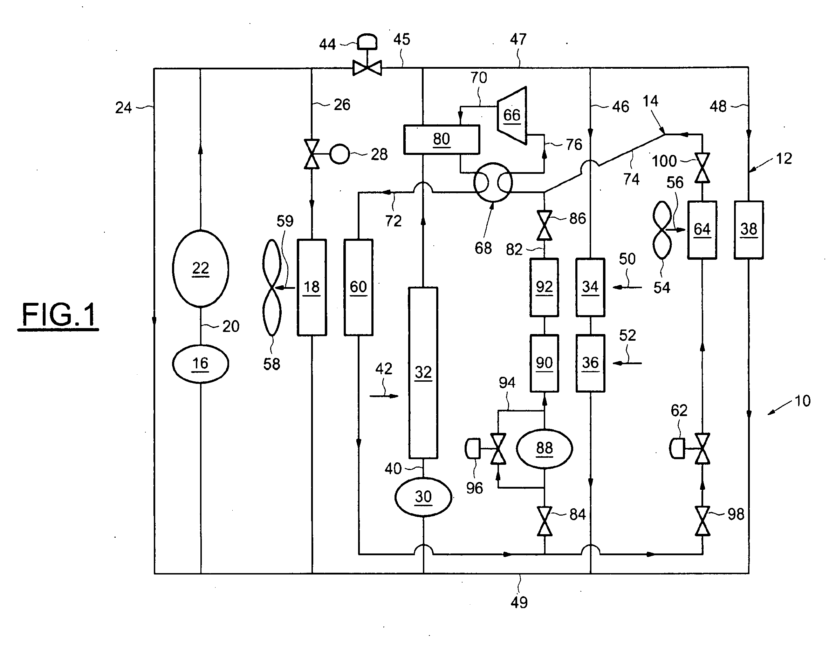

Sur les figures 1 à 3, on a représenté l'architecture générale d'un système de gestion d'énergie pour véhicule automobile équipé d'un moteur à combustion interne, désigné par la référence numérique générale 10, qui comporte un circuit de refroidissement 12 du moteur et une boucle frigorifique 14 réversible.

Le circuit de refroidissement 12 est pourvu d'un circuit principal de fluide caloporteur comprenant une pompe 16 permettant la circulation dudit fluide et un radiateur 18 monté en dérivation par rapport à la pompe 16.

A la sortie de la pompe 16, le fluide caloporteur est véhiculé par une conduite 20 du circuit principal et traverse le moteur à combustion 22 du véhicule, puis se divise en deux écoulements. Un premier écoulement passe par une conduite 24 en dérivation par rapport à la conduite 20. Un second écoulement se dirige dans une conduite 26 en dérivation par rapport à la conduite 20 qui comporte le radiateur 18, par exemple un échangeur de chaleur air/eau dont l'entrée est plus ou moins obturée par un thermostat 28. Les premier et second écoulements retournent ensuite à la pompe 16. La conduite 24 forme une branche de dérivation pour court-circuiter le radiateur 18.

Le circuit de refroidissement 12 comprend également un circuit auxiliaire de fluide caloporteur monté en dérivation sur le circuit principal, et plus précisément sur la branche 26. Le circuit auxiliaire est pourvu d'une pompe 30 permettant la circulation du fluide caloporteur, d'un premier échangeur de chaleur 32 monté en aval de ladite pompe, d'un second et troisième échangeurs de chaleur 34, 36 montés en dérivation par rapport au premier échangeur de chaleur 32, et d'un aérotherme 38 en dérivation par rapport aux second et troisième échangeurs de chaleur 34,36.

A la sortie de la pompe 30, le fluide caloporteur est véhiculé par une conduite 40 en dérivation par rapport à la conduite 26 du circuit principal de fluide caloporteur, et traverse l'échangeur de chaleur 32 du type air/eau. L'échangeur de chaleur 32 est traversé d'une part par le fluide caloporteur du circuit de refroidissement 12 et d'autre part, par les gaz d'échappement issus du moteur à combustion 22 et illustrés schématiquement par la flèche 42, comme cela sera décrit plus en détail par la suite.

Entre le circuit principal et le circuit auxiliaire de fluide caloporteur, une vanne 44 d'isolement est prévue. Plus précisément, la vanne 44 est disposée sur une branche 45 reliant les conduites 26 et 40. Dans une position fermée de la vanne 44 d'isolement, le fluide caloporteur issu de la conduite 40 traverse une conduite 47 et se sépare en deux écoulements, un premier écoulement passant par une conduite 46 en dérivation par rapport à la conduite 40 et traversant en série le second échangeur de chaleur 34, puis le troisième échangeur de chaleur 36. Le second écoulement traverse une conduite 48 en dérivation par rapport à la conduite 46, jusqu'à l'aérotherme 38. Les premier et second écoulements retournent ensuite à la pompe 30, par l'intermédiaire d'une conduite 49.

Les échangeurs de chaleur 34 et 36 sont du type air/eau. L'échangeur de chaleur 34 est traversé par le fluide caloporteur véhiculé à travers la conduite 46 et par l'air destiné à être admis à l'intérieur du moteur à combustion 22 et illustré par la flèche. 50. Le troisième échangeur de chaleur 36 est quant à lui traversé par le fluide caloporteur et par une partie des gaz d'échappement issus de la combustion du moteur 22 et destinés à être réintroduits à l'admission dudit moteur. Ce flux de gaz d'échappement est illustré sur la figure par la flèche 52. L'aérotherme 38 est par exemple un échangeur du type air/eau. Un ventilateur 54 est capable d'amener un flux d'air, illustré par la flèche 56, sur l'aérotherme 38. Le flux d'air 56 est destiné à être pulsé à l'intérieur de l'habitacle du véhicule automobile après avoir traversé l'aérotherme 38. De façon similaire, un ventilateur 58 est capable d'amener un flux d'air, illustré par la flèche 59, sur le radiateur 18.

La boucle frigorifique 14 comprend un premier échangeur de chaleur 60, un élément de détente 62, un second échangeur de chaleur 64 et une machine 66 formant compresseur. Les premier et second échangeurs de chaleur 60 et 64 sont du type air/fluide frigorigène. L'échangeur de chaleur 60 est traversé par le fluide frigorigène de la boucle frigorifique 14 et par le flux d'air 59 amené par le ventilateur 58. Le flux d'air 59 traverse en série l'échangeur de chaleur 60 de la boucle frigorifique et l'échangeur de chaleur 18 du circuit de refroidissement 12.

De façon analogue, l'échangeur de chaleur 64 est traverse par le flux d'air 56 amené par le ventilateur 54. L'échangeur de chaleur 64 est disposé en amont de l'échangeur de chaleur 38 du circuit dé refroidissement 12, en considérant le sens de circulation du flux d'air 56. En d'autres termes, le flux d'air 56 amené par le ventilateur 54 traverse en série l'échangeur de chaleur 64, puis l'échangeur de chaleur 38.

La boucle frigorifique comprend également des moyens d'inversion 68 du sens de circulation du fluide frigorigène dans la boucle frigorifique 14 de manière à inverser le cycle de fonctionnement de celle-ci. Les moyens d'inversion sont constitués par une vanne quatre voies.

En mode frigorifique, tel que cela est illustré à la figure 1, le fluide frigorigène mis en mouvement par la machine 66 formant compresseur est véhiculé par une conduite 70 qui est mis en communication fluidique avec une conduite 72 sur laquelle est disposée l'échangeur de chaleur 60, par l'intermédiaire des moyens d'inversion 68. Le fluide frigorigène traverse ensuite l'échangeur de chaleur 60, l'élément de détente 62 puis l'échangeur de chaleur 64 par l'intermédiaire d'une conduite 74, jusqu'à retourner vers les moyens d'inversion 68. Dans ce mode de fonctionnement, lesdits moyens d'inversion mettent en communication fluidique la conduite 74 et une conduite 76 reliée au compresseur 66.

En mode frigorifique, l'échangeur de chaleur 60, jouant le rôle de condenseur, dégage des calories vers l'extérieur. L'échangeur de chaleur 64 qui joue le rôle d'évaporateur permet le refroidissement du flux d'air 56 destiné à être pulsé à l'intérieur de l'habitacle du véhicule automobile.

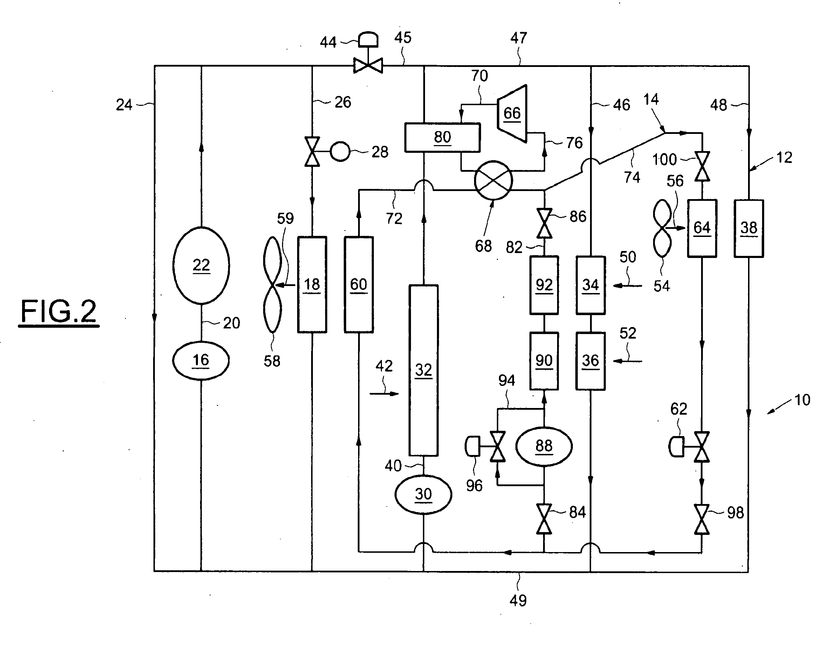

En mode pompe à chaleur telle qu'illustrée à la figure 2, le sens d'écoulement du fluide frigorigène est inversé, par l'intermédiaire des moyens d'inversion 68. Dans ce mode de fonctionnement, la conduite 70 est en communication fluidique avec la conduite 74, la conduite 76 étant quant à elle en communication avec la conduite 72. Ainsi, l'échangeur de chaleur 64 joue le rôle de condenseur tandis que l'échangeur de chaleur 60 joue le rôle d'évaporateur. L'échangeur de chaleur 64 permet alors de réchauffer le flux d'air 56 destiné à l'habitacle du véhicule automobile.

La boucle frigorifique 14 est ici couplée thermiquement avec le circuit de refroidissement 12 du moteur 22. A cet égard, elle comprend un échangeur de chaleur 80 traversé à la fois par le flux frigorigène de la boucle frigorifique 14 et par le fluide caloporteur du circuit de refroidissement 12. En considérant le sens de circulation du fluide frigorigène en mode pompe à chaleur ou en mode frigorifique, l'échangeur de chaleur 80 est situé entre le compresseur 66 et les moyens d'inversion 68. Sur le circuit de refroidissement 12, l'échangeur de chaleur 80 est disposé entre la conduite 47 et l'échangeur de chaleur 32, directement en aval de celui-ci. En mode frigorifique, l'échangeur 80 permet d'effectuer un premier refroidissement du fluide frigorigène et ainsi d'améliorer la condensation et donc le rendement et les performances du cycle.

La boucle frigorifique 14 comprend encore une branche de dérivation 82 montée d'une part à la sortie de l'échangeur 60, et d'autre part à la sortie de l'échangeur de chaleur 64, en considérant la circulation du fluide en mode frigorifique. La branche 82 comprend, à chaque extrémité, une vanne 84, 86 de fermeture. La branche de dérivation 82 est pourvue également d'une pompe 88 permettant la circulation du fluide frigorigène, d'un échangeur de chaleur 90 en aval de ladite pompe et traversé par le flux 52 de gaz d'échappement destinés à être réintroduits à l'intérieur du moteur 22 à combustion, et d'un échangeur de chaleur 92 traversé par le fluide frigorigène et par le flux d'air 50 destiné également à être admis à l'intérieur du moteur 22. Le flux d'air 50 traverse en série l'échangeur de chaleur 34 du circuit de refroidissement 12 et l'échangeur de chaleur 92. Le flux d'air 52 traverse quant à lui en série l'échangeur de chaleur 36, puis l'échangeur de chaleur 90. L'échangeur de chaleur 92 est situé entre l'échangeur de chaleur 90 et la vanne 86 de fermeture.

D'autres dispositions consistent encore à inverser la position des échangeurs 90 et 92 ou à placer les échangeurs 90 et 92 en parallèle.

La boucle frigorifique 14 comprend également une conduite 94 montée en dérivation sur la branche 82. La branche 94 est connectée d'une part entre la vanne de fermeture 84 et la pompe 88 et d'autre part entre ladite pompe et l'échangeur de chaleur 90. Sur la conduite 94 est disposé un détendeur 96.

La pompe 88, les échangeurs de chaleur 60, 80, 90 et 92 ainsi que les moyens d'inversion 68 et la machine 66 sont utilisés dans un troisième mode de fonctionnement de la boucle frigorifique 14, dans lequel on valorise les calories produites par le moteur 22 à combustion et véhiculées ensuite par le fluide frigorigène, après transfert thermique. Un tel mode est généralement appelé mode Rankine.

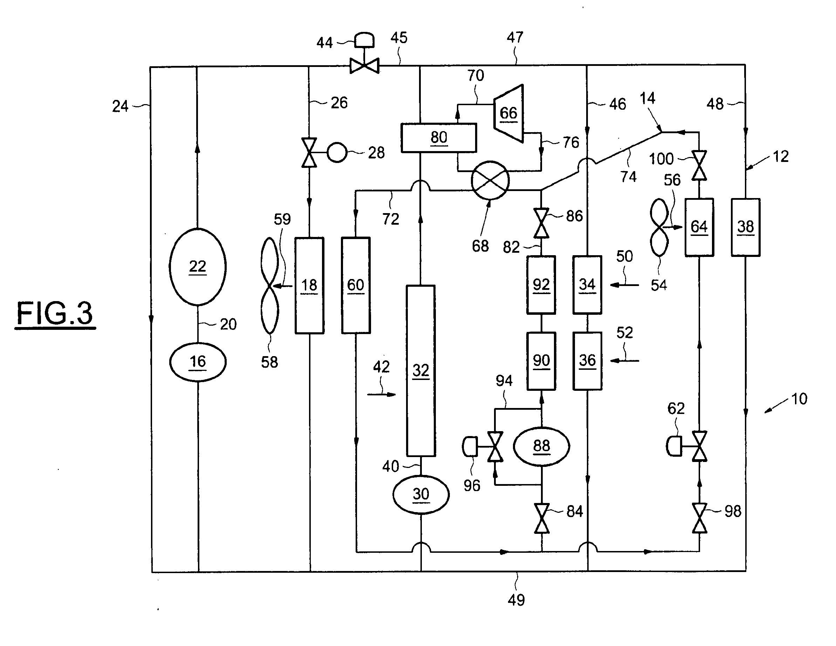

Dans ce mode de fonctionnement illustré à la figure 3, le fluide frigorigène mis en circulation par la pompe 88 est véhiculé vers l'échangeur de chaleur 90, puis l'échangeur de chaleur 92, et ensuite vers la conduite 74 qui est mise en communication fluidique avec la conduite 70, par les moyens de conversion 68. Ainsi, le fluide frigorigène traverse l'échangeur de chaleur 80 et est envoyé vers la machine 66. Le passage du fluide frigorigène à travers les échangeur de chaleur 90, 92 et 80 permet de chauffer le fluide frigorigène à haute pression et de le faire passer de la phase liquidé à la phase vapeur. Le fluide frigorigène se détend ensuite à l'intérieur de la machine 66, qui joue alors le rôle d'une turbine entraînée en rotation par le fluide frigorigène. La machine 66 forme ainsi un moyen de récupération d'énergie. Cette énergie peut par exemple être récupérée sous une forme mécanique en assurant la mise en rotation d'un compresseur d'air de suralimentation, d'une pompe à eau de refroidissement, de la pompe 88 de circulation, etc ... L'énergie de rotation peut également être récupérée sous forme électrique par l'intermédiaire d'un alternateur qui est entraîné par la machine 66 formant turbine. La machine 66 est donc une machine réversible capable lorsqu'elle est traversée dans un sens de comprimer un fluide en phase vapeur, et lorsqu'elle est traversée dans le sens inverse de détendre le fluide en phase vapeur et ainsi de récupérer l'énergie de détente.

A la sortie de la machine 66, le fluide frigorigène passe ensuite à travers l'échangeur de chaleur 60 qui joue le rôle de condenseur avant d'être dirigé à nouveau vers la pompe 88.

Dans ce mode de valorisation des calories, les vannes 98, 100 sont fermées. La vanne 98 est disposée en amont de l'élément de détente 62, en considérant le sens de circulation du fluide frigorigène en mode frigorifique. La vanne 100 est quant à elle disposée en aval de l'échangeur de chaleur 64, en considérant le même sens de circulation. En mode frigorifique et en mode pompe à chaleur, les vannes 84 et 86 sont fermées.

Lors d'un démarrage à froid en hiver, une première phase de fonctionnement du système 10 peut consister à actionner la pompe 30 pour mettre en mouvement le fluide de refroidissement du circuit de refroidissement 12 à travers l'échangeur de chaleur 32 traversé par le flux 42 de gaz d'échappement. Ainsi, on accélère la montée en température du fluide caloporteur et donc du moteur 22, du flux d'air 50 traversant l'échangeur de chaleur 34 et destinés à être réintroduits à l'intérieur du moteur 22, et du flux 56 d'air destiné à être pulsé à l'intérieur du véhicule automobile.

Si cela est nécessaire, le mode pompe à chaleur de la boucle frigorifique peut être activé afin d'accélérer la montée en température de l'air de l'habitacle, et éventuellement la température du flux 50 d'air destiné à être admis à l'intérieur du moteur 22 à combustion en fonction de l'état d'ouverture des vannes 84, 86.

Lorsque la température du fluide caloporteur a atteint un niveau suffisant, par exemple de l'ordre de 80°C, une deuxième phase peut consister à utiliser le mode de valorisation des calories. Durant cette phase, le fluide frigorigène est chauffé et évaporé à travers les échangeurs de chaleur 90, 92 et l'échangeur de chaleur 80. Ces échangeurs 80, 90 et 92 forment des sources chaudes. Comme mentionné précédemment, la machine 66 est alors mise en rotation par la détente du fluide frigorifique et fonctionne comme une turbine permettant une récupération d'énergie. Ainsi, les flux 50, 52 de gaz destinés à l'admission du moteur 22 sont refroidis, leurs calories étant prélevées par le fluide frigorigène contribuant ainsi à la réduction de la consommation et des émissions de particules polluantes. Le flux d'air 56 destiné à être pulsé à l'intérieur de l'habitacle du véhicule automobile est quant à lui réchauffé lors de son passage à travers l'échangeur de chaleur 38 grâce au fluide caloporteur.

Avantageusement, la vanne 44 du circuit de refroidissement peut éventuellement être fermée afin d'isoler le moteur 22 des échangeurs de chaleur 32, 34, 36, 80 et 38. Dans ces conditions, les pompes 16 et 30 fonctionnent. Ceci permet d'augmenter la température du fluide caloporteur traversant les échangeurs 32, 34, 36 et 80 et l'aérotherme 38, ce qui accroît le rendement du mode de valorisation des calories et la température à l'intérieur de l'habitacle du véhicule. Cette vanne 44 peut rester ouverte si l'on préfère exploiter en complément les calories délivrées pour le moteur 22.

Lors d'un démarrage à froid en été, une première phase de fonctionnement peut consister à actionner la pompe 30 pour mettre en mouvement le fluide de refroidissement du circuit de refroidissement 12 à travers l'échangeur de chaleur 32 traversé par le flux 42 de gaz d'échappement. On accélère donc la montée en température du fluide caloporteur et du moteur 22, et du flux 50 d'air traversant l'échangeur de chaleur 34.

Si cela est nécessaire, le mode frigorifique peut être activé afin d'accélérer la mise en température de l'air de l'habitacle, et éventuellement refroidir à une température relativement basse les échangeurs de chaleur 90 et 92 lorsque le moteur 22 a atteint une température prédéterminée.

Lorsque le mode frigorifique est arrêté, la pompe 88 peut être mise en route afin de récupérer des calories par l'intermédiaire de la machine 66 en mode Rankine. La vanne 44 d'isolement du circuit de refroidissement 12 peut être fermée afin d'augmenter la température du fluide caloporteur traversant les échangeurs de chaleur 32, 34, 36 et 80, et d'accroître ainsi le rendement de ce mode de fonctionnement en augmentant les calories transférées ensuite au fluide frigorigène. Les flux 50, 52 de gaz destinés à l'admission du moteur 22 sont refroidis, contribuant ainsi à la réduction de la consommation et des émissions de particules polluantes.

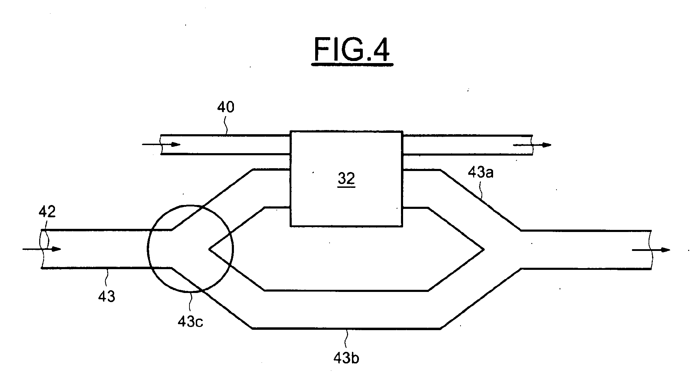

Sur la figure 4 est représenté le positionnement de l'échangeur de chaleur 32 quoi est traversé par les gaz d'échappement issus du moteur à combustion interne et véhiculés à travers une tubulure d'échappement 43. Plus précisément, la tubulure d'échappement 43 se divise en deux branches 43a et 43b, l'échangeur de chaleur 32 étant disposé sur la branche 43a. Une vanne à trois voies 43 c est prévue en amont de l'échangeur de chaleur 32, en considérant le sens de circulation des gaz d'échappement à l'intérieur de la tubulure d'échappement 43 pour court-circuiter sur commande ledit échangeur. On peut ainsi piloter la quantité de gaz d'échappement traversant l'échangeur de chaleur 32. Une alternative consiste à placer l'échangeur 32 directement sur la conduite 43 des gaz d'échappement et ainsi de ne pas diviser cette tubulure 43 en deux branches 43a et 43b et de ne pas prévoir de vanne 43c.

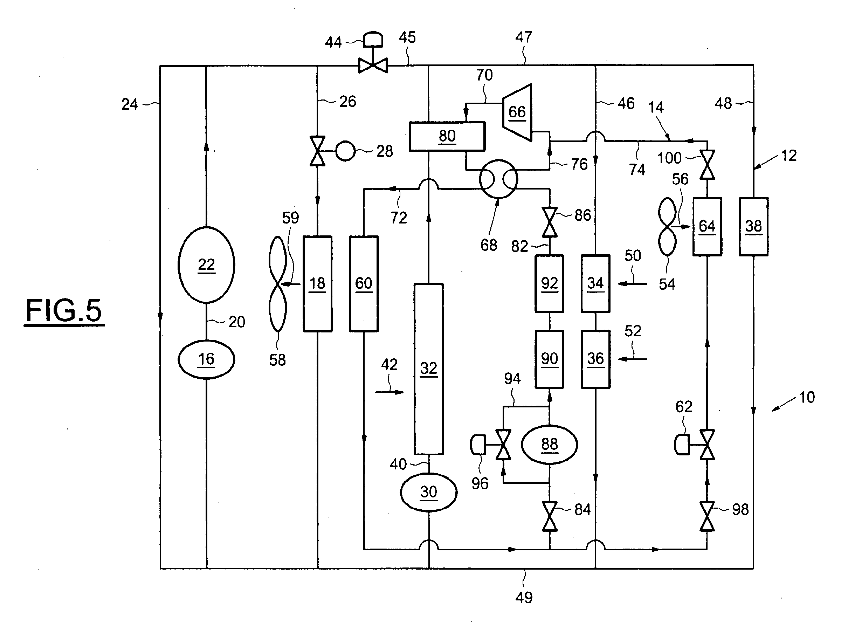

Le mode de réalisation illustré à la figure 5 sur laquelle les éléments identiques portent les mêmes références diffère en ce que la conduite 74 reliée à l'échangeur de chaleur 64 est raccordée directement à la conduite 76. La conduite 82 est quant à elle reliée au moyen d'inversion 68.

Ainsi, la conduite 74 est prévue entre les moyens d'inversion 68 et la machine 66, directement en aval de celle-ci en considérant le sens de circulation du fluide frigorigène en mode valorisation des calories, ou en amont de celle-ci en considérant le sens de circulation du fluide frigorigène en mode climatisation tel qu'illustré sur la figure 5 ou en mode pompe à chaleur.

Avec une telle disposition, en mode valorisation des calories véhiculées par le fluide frigorigène 16, l'échangeur de chaleur 64 peut être utilisé comme condenseur, ce qui accroît encore le rendement du système 10 et permet de réchauffer simultanément l'air destiné à être pulsé à l'intérieur du véhicule automobile lorsque cela est nécessaire.

Par ailleurs, en mode pompe à chaleur, l'air traversant l'échangeur 92 peut être réchauffé pendant les premiers instants après le démarrage à froid, pendant que l'air alimentant l'habitacle peut être refroidi à travers l'échangeur 64.

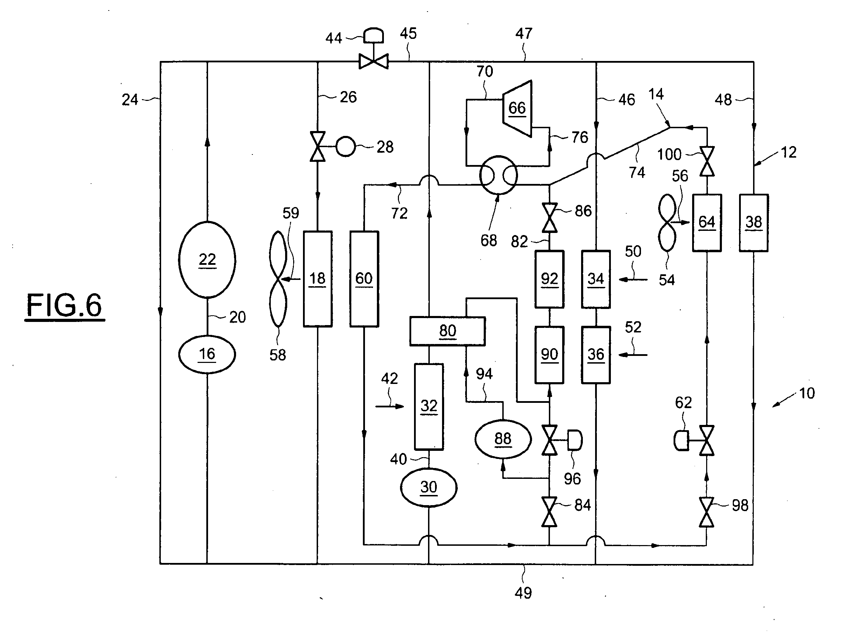

Le mode de réalisation illustré à la figure 6 diffère du mode de la réalisation des figures 1 à 3 en ce que l'échangeur de chaleur 80 est monté sur la boucle frigorifique 16 entre la pompe 88 et l'échangeur de chaleur 90.

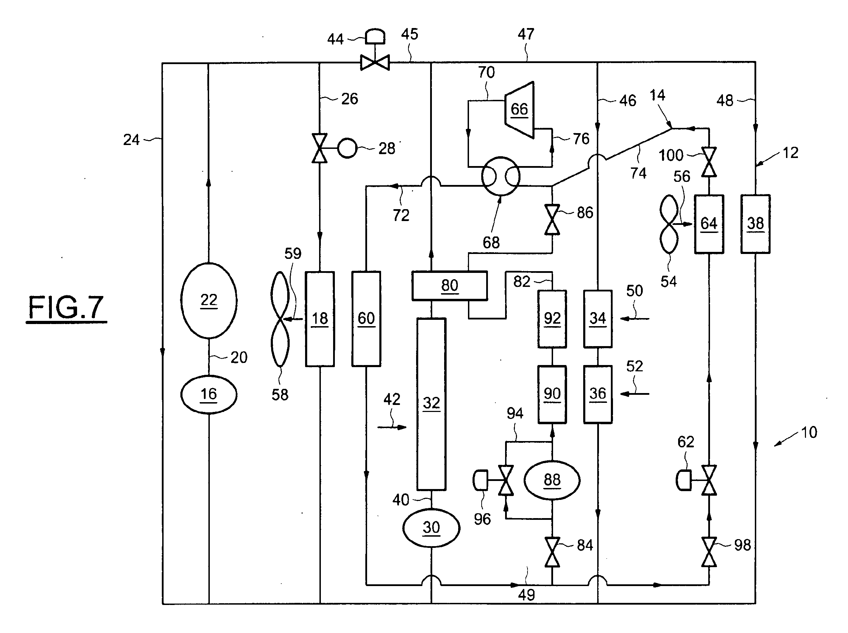

En variante, tel qu'illustré à la figure 7, il est également possible de disposer l'échangeur de chaleur 80 en aval des échangeurs de chaleur 90 et 92, en considérant le sens de circulation du fluide frigorigène à l'intérieur de la branche 82.

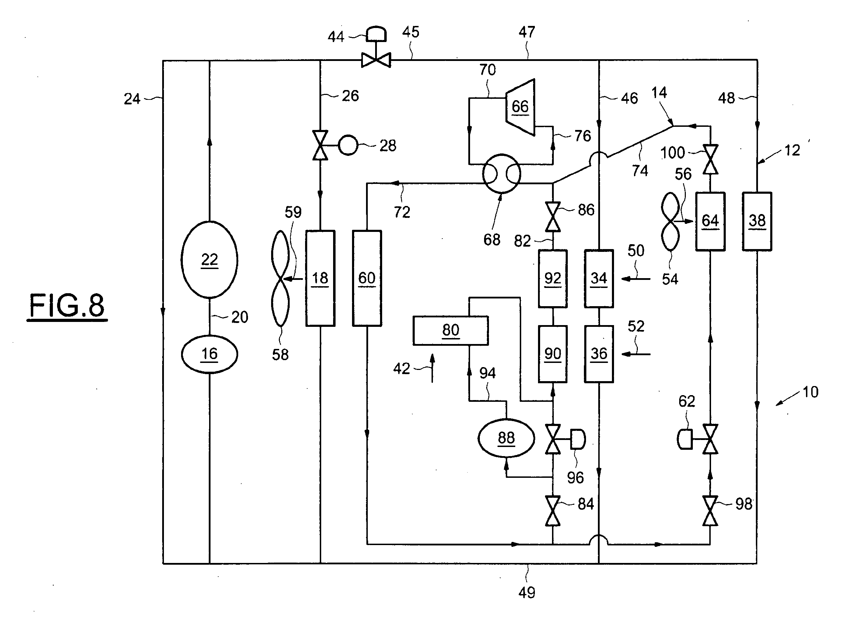

Le mode de réalisation illustré à la figure 8 diffère du mode de réalisation de la figure 6 en ce que l'échangeur de chaleur 80 est traversé directement par le flux de gaz d'échappement illustré par la flèche 42. Dans ce mode de réalisation, la pompe 30 et l'échangeur de chaleur 32 sont supprimés. Ainsi, on récupère directement les calories sur la ligne d'échappement du moteur à combustion 22, i.e. sans passer par l'intermédiaire du circuit de refroidissement 12. Une variante de réalisation consiste à utiliser le flux du circuit de refroidissement comme source froide, c'est-à-dire à placer l'échangeur 60 sur le circuit de refroidissement, de préférence sur une branche dans laquelle la température est la plus froide.

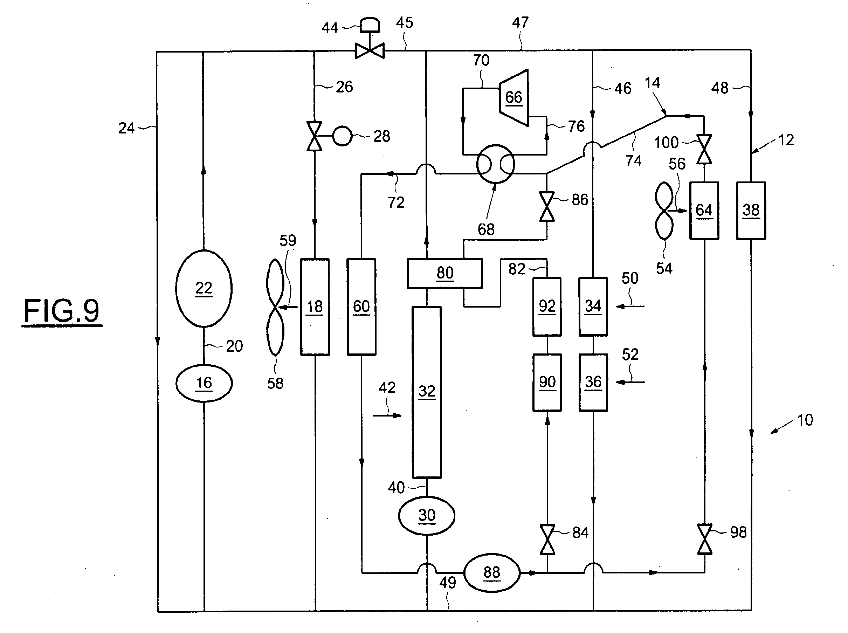

Le mode de réalisation illustré à la figure 9 diffère de celui de la figure 7 en ce que la pompe 88 est disposée directement en aval de l'échangeur de chaleur 60, en considérant le sens de circulation du fluide frigorigène en mode frigorifique, et en ce que le détendeur 96 est supprimé. La pompe 88 est dans le mode frigorifique ou dans le mode pompe à chaleur entraînée en rotation grâce à la détente dudit fluide. L'énergie peut être utilisée par exemple pour participer à l'entraînement du compresseur de climatisation, ou encore être récupérée sous forme électrique à travers un alternateur. La pompe 88 disposée entre l'échangeur de chaleur et la conduite 82 fonctionne ainsi comme un détendeur.

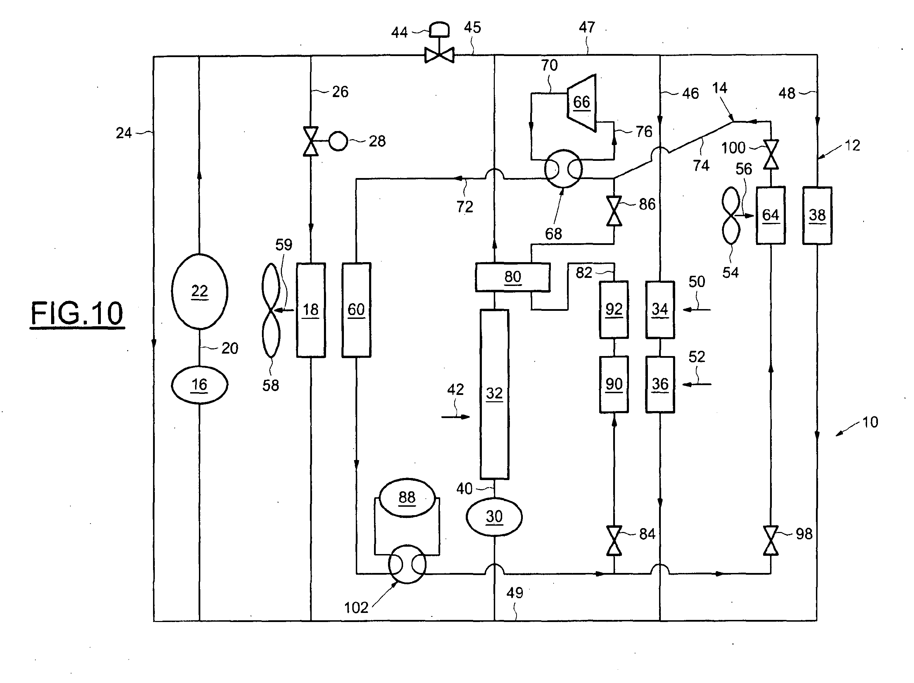

La variante de la réalisation illustrée à la figure 10 diffère du mode de réalisation de la figure 9 en ce que la pompe 88 est montée en parallèle de la conduite 72 par l'intermédiaire d'une vanne quatre voies 102 disposée entre l'échangeur de chaleur 60 et la conduite 82. Dans cette variante de réalisation, le sens de circulation du fluide frigorigène dans la pompe 88 formant également détendeur est différent en fonction du mode de fonctionnement du système. On peut ainsi choisir un sens de circulation à travers la pompe 88 formant détendeur, i.e. en modes frigorifique sur un mode pompe à chaleur, et un sens de circulation inversé à travers la pompe 88 en mode Rankine.

Comme illustré sur les figures 9 et 10, la récupération d'énergie à travers la pompe 88 formant détendeur pendant le mode frigorifique ou pendant le mode pompe à chaleur s'accompagne également d'une amélioration des performances du système 10 grâce au fait que la détente de la pompe 88 est de type isentropique.

Grâce à la structure du système selon l'invention, on peut utiliser une boucle frigorifique réversible traditionnelle pour obtenir une valorisation des calories produites par le moteur, de manière particulièrement simple, efficace et économique, en utilisant un même circuit de circulation, un même fluide frigorigène et des composants communs.

## Revendications

1. Système de gestion d'énergie d'un véhicule automobile comprenant une boucle frigorifique (14) réversible avec circulation d'un fluide frigorigène, des moyens d'inversion (68) du cycle de fonctionnement de la boucle frigorifique mobiles entre une position en mode frigorifique et une position en mode pompe à chaleur, au moins une première source chaude (80) apte à évaporer le fluide frigorigène, et un moyen de récupération (66) d'énergie à partir de la détente du fluide frigorigène à l'état de vapeur, **caractérisé en ce qu'**il comprend au moins une seconde source chaude (90, 92) comprenant un échangeur de chaleur monté sur une branche (82) de dérivation de la boucle frigorifique et traversé par des gaz destinés à être admis à l'intérieur du moteur thermique du véhicule automobile, et au moins un échangeur de chaleur (60, 64) apte à permettre la condensation du fluide frigorigène en liquide, les moyens d'inversion (68) étant aptes à permettre un écoulement du fluide frigorigène de la seconde source chaude (90, 92) vers la première source chaude (80) puis en direction du moyen de récupération (66) et ensuite à travers l'échangeur de chaleur (60, 64), lorsqu'ils sont dans une position identique à celle correspondant au mode pompe à chaleur, pour obtenir un fonctionnement selon un mode de valorisation des calories véhiculées par le fluide frigorigène.

2. Système selon la revendication 1, dans lequel les moyens d'inversion (68) sont constitués par une vanne quatre voies de la boucle frigorifique (14) réversible.

3. Système selon la revendication 1 ou 2, dans lequel l'échangeur de chaleur (64) est un échangeur pour le chauffage de l'habitacle du véhicule automobile.

4. Système selon l'une quelconque des revendications précédentes, comprenant une conduite (74) pour l'alimentation en fluide frigorigène de l'échangeur de chaleur (64) prévue entre les moyens d'inversion (68) et le moyen de récupération (66) d'énergie, directement en aval de celui-ci en considérant le sens de circulation du fluide frigorigène en mode de valorisation des calories dudit fluide.

5. Système selon l'une quelconque des revendications précédentes, dans lequel la première source chaude (80) est montée entre les moyens d'inversion (68) et le moyen de récupération (66) d'énergie, directement en amont de celui-ci en considérant le sens de circulation du fluide frigorigène en mode de valorisation des calories dudit fluide.

6. Système selon l'une quelconque des revendications 1 à 4, dans lequel la première source chaude (80) est montée entre une pompe (88) de mise en circulation du fluide frigorigène et au moins une seconde source chaude (90, 92).

7. Système selon l'une quelconque des revendications 1 à 4, dans lequel la première source chaude (80) est montée en aval de la seconde source chaude (90, 92).

8. Système selon l'une quelconque des revendications précédentes, dans lequel la première source chaude (80) comprend un échangeur de chaleur traversé par le fluide frigorigène et par un fluide caloporteur du moteur thermique du véhicule automobile.

9. Système selon l'une quelconque des revendications 1 à 7, dans lequel la première source chaude (80) comprend un échangeur de chaleur traversé par le fluide frigorigène et par des gaz d'échappement issus du moteur thermique du véhicule automobile.

10. Système selon l'une quelconque des revendications précédentes, comprenant une pompe (88) de mise en circulation du fluide frigorigène disposée immédiatement en aval d'un échangeur de chaleur (60) apte à permettre la condensation du fluide frigorigène en liquide.

11. Système selon l'une quelconque des revendications précédentes, comprenant une vanne d'isolement (44) du circuit principal et du circuit auxiliaire d'un circuit de refroidissement (12) du moteur thermique du véhicule automobile.

## Claims

1. Energy management system for a motor vehicle, comprising a reversible refrigeration loop (14) with the circulation of a refrigerant, reversing means (68) for reversing the operating cycle of the refrigeration loop, which means can move between a refrigeration mode position and a heat pump mode position, at least one first hot source (80) capable of evaporating the refrigerant, and a recuperating means (66) for recuperating energy from the expansion of the refrigerant to the vapour state, **characterized in that** it comprises at least one second hot source (90, 92) comprising a heat exchanger mounted on a bypass leg (82) of the refrigeration loop and though which gases intended to be admitted to the motor vehicle combustion engine pass, and at least one heat exchanger (60, 64) capable of allowing the refrigerant to be condensed into a liquid form, the reversing means (68) being capable of allowing the refrigerant to flow from the second hot source (90, 92) to the first hot source (80) and then in the direction of the recuperating means (66) and then through the heat exchanger (60, 64), when they are in a position identical to the one corresponding to the heat pump mode, in order to obtain operation whereby the heat energy carried by the refrigerant is put to beneficial use.

2. System according to Claim 1, in which the reversing means (68) consist of a four-way valve in the reversible refrigeration loop (14).

3. System according to Claim 1 or 2, in which the heat exchanger (64) is an exchanger used for heating the motor vehicle cabin.

4. System according to any one of the preceding claims, comprising a pipe (74) for supplying the heat exchanger (64) with refrigerant, the pipe being provided between the reversing means (68) and the energy recuperating means (66), directly downstream of the latter when considering the direction in which the refrigerant flows in the mode in which the heat energy contained in said refrigerant is put to beneficial use.

5. System according to any one of the preceding claims, in which the first hot source (80) is mounted between the reversing means (68) and the energy recuperating means (66), directly upstream of the latter when considering the direction in which the refrigerant flows in the mode in which the heat energy contained in said refrigerant is put to beneficial use.

6. System according to any one of Claims 1 to 4, in which the first hot source (80) is mounted between a pump (88) used to circulate the refrigerant and at least a second hot source (90, 92).

7. System according to any one of Claims 1 to 4, in which the first hot source (80) is mounted downstream of the second hot source (90, 92).

8. System according to any one of the preceding claims, in which the first hot source (80) comprises a heat exchanger through which the refrigerant and a heat-transfer fluid for the motor vehicle combustion engine pass.

9. System according to any one of Claims 1 to 7, in which the first hot source (80) comprises a heat exchanger through which the refrigerant and exhaust gases from the motor vehicle combustion engine pass.

10. System according to any one of the preceding claims, comprising a pump (88) for circulating the refrigerant, which pump is positioned immediately downstream of a heat exchanger (60) capable of allowing the refrigerant to be condensed into a liquid form.

11. System according to any one of the preceding claims, comprising an isolating valve (44) that isolates the main circuit and the auxiliary circuit of a motor vehicle combustion engine cooling circuit (12).

## Patentansprüche

1. System für das Energiemanagement eines Kraftfahrzeugs, das einen reversiblen Kühlungskreis (14) mit Zirkulation eines Kühlungsfluids, Mittel (68) zum Umkehren des Funktionszyklus des Kühlkreises, die zwischen einer Kühlungsbetriebsart-Position und einer Wärmepumpenbetriebsart-Position beweglich sind, wenigstens eine erste Wärmequelle (80), die das Kühlungsfluid verdampfen kann, und wenigstens ein Mittel (66) zum Rückgewinnen von Energie aus der Entspannung des Kühlungsfluids im Dampfzustand umfasst, **dadurch gekennzeichnet, dass** es wenigstens eine zweite Wärmequelle (90, 92), die einen Wärmetauscher aufweist, der in einem Ableitungszweig (82) der Kühlungsschleife angebracht ist und von Gasen durchströmt wird, die dazu vorgesehen sind, dem Innenraum der Brennkraftmaschine des Kraftfahrzeugs zugeführt zu werden, und wenigstens einen Wärmetauscher (60, 64), der die Kondensation des Kühlungsfluids in Flüssigkeit ermöglichen kann, umfasst, wobei die Umkehrungsmittel (68) ein Abfließen von Kühlungsfluid von der zweiten Wärmequelle (90, 92) zu der ersten Wärmequelle (80) und dann in Richtung der Wiedergewinnungsmittel (66) und schließlich durch den Wärmetauscher (60, 64) ermöglichen können, wenn sie in einer Position sind, die mit jener übereinstimmt, die der Wärmepumpenbetriebsart entspricht, um eine Funktion gemäß einer Betriebsart zur Erhöhung der durch das Kühlungsfluid transportierten Wärme zu erhalten.

2. System nach Anspruch 1, wobei die Umkehrungsmittel (68) durch ein Vierwegeventil des umkehrbaren Kühlungskreises (14) gebildet sind.

3. System nach Anspruch 1 oder 2, wobei der Wärmetauscher (64) ein Tauscher für die Wärme des Fahrgastraums des Kraftfahrzeugs ist.

4. System nach einem der vorhergehenden Ansprüche, das eine Leitung (74) für die Versorgung mit Kühlungsfluid des Wärmetauschers (64), die zwischen den Umkehrungsmitteln (68) und dem Energiewiedergewinnungsmittel (66) direkt stromabseitig derselben bei Betrachtung in Richtung der Zirkulation des Kühlungsfluids in der Betriebsart zur Erhöhung der Wärme des Fluids vorgesehen ist, umfasst.

5. System nach einem der vorhergehenden Ansprüche, wobei die erste Wärmequelle (80) zwischen den Umkehrungsmitteln (68) und dem Energiewiedergewinnungsmittel (66) direkt stromaufseitig desselben bei Betrachtung in Richtung der Zirkulation des Kühlungsfluids in der Betriebsart zur Erhöhung der Wärme des Fluids angebracht ist.

6. System nach einem der Ansprüche 1 bis 4, wobei die erste Wärmequelle (80) zwischen einer Pumpe (88) zum Versetzen des Kühlungsfluids in Zirkulation und wenigstens einer zweiten Wärmequelle (90, 92) angebracht ist.

7. System nach einem der Ansprüche 1 bis 4, wobei die erste Wärmequelle (80) stromabseitig der zweiten Wärmequelle (90, 92) montiert ist.

8. System nach einem der vorhergehenden Ansprüche, wobei die erste Wärmequelle (80) einen Wärmetauscher umfasst, der von dem Kühlungsfluid und von einem wärmetragenden Fluid der Brennkraftmaschine des Kraftfahrzeugs durchströmt wird.

9. System nach einem der Ansprüche 1 bis 7, wobei die erste Wärmequelle (80) einen Wärmetauscher umfasst, der von dem Kühlungsfluid und von Abgasen, die von der Brennkraftmaschine des Kraftfahrzeugs stammen, durchströmt wird.

10. System nach einem der vorhergehenden Ansprüche, das eine Pumpe (88) umfasst, um das Kühlungsfluid in Zirkulation zu versetzen, die unmittelbar stromabseitig eines Wärmetauschers (60) angeordnet ist, der die Kondensation des Kühlungsfluids in eine Flüssigkeit ermöglichen kann.

11. System nach einem der vorhergehenden Ansprüche, das ein Ventil (44) zum Trennen des Hauptkreises vom Hilfskreis eines Kühlkreislaufs (12) der Brennkraftmaschine des Kraftfahrzeugs enthält.
